# EUROPÄISCHE PATENTSCHRIFT

(11) **EP 1 619 313 B1**
(45) Veröffentlichungstag und Bekanntmachung des Hinweises auf die Patenterteilung: **21.03.2007**
(21) Anmeldenummer: 04017630.7
(22) Anmeldetag: 23.07.2004
(51) Int. Cl.: E01H 5/06, E02F 3/76

(54) **Motorgetriebenes Landschaftspflegegerät**
Motor driven landscape maintenance apparatus
Appareil d'entretien de paysage entraîné par un moteur

(43) Veröffentlichungstag der Anmeldung: 25.01.2006
(73) Patentinhaber: Julius Tielbürger GmbH & Co. KG, D-32351 Stemwede-Oppenwehe (DE)
(72) Erfinder: Tielbürger, Jörg, 32351 Stemwede-Oppenwehe (DE)
(74) Vertreter: Dantz, Jan Henning

(56) Entgegenhaltungen:
- US-A- 3 422 553
- US-A- 4 383 381

## Beschreibung

Die Erfindung bezieht sich auf ein motorgetriebenes Landschaftspflegegerät, welches frontseitig mit einem um eine feste Achse schwenkbaren Pflegewerkzeug, insbesondere einem Räumschild, ausgestattet ist, welches über einen Werkzeughalter mit dem Pflegegerät auswechselbar gekoppelt ist, wobei an dem Pflegewerkzeug eine um eine horizontale Achse schwenkbare, mit Rastausnehmungen versehene Rastplatte gelagert ist, deren Rastausnehmungen mittels einer Bedienerstange in und außer Eingriff mit einem in einem festen Bauteil, vorzugsweise im Werkzeughalter, eingesetzten Stift bringbar sind. Ein solches Landschaftspflegegerät ist aus US-A-4 383 381 bekannt.

Bei dem in Rede stehenden Landschaftspflegegerät wird die Rastplatte um eine horizontale Achse geschwenkt, die parallel und im Abstand zu einer Radachse verläuft. Das Pflegewerkzeug selbst wird um einen quer dazu verlaufenden Bolzen geschwenkt, welches jedoch nur möglich ist, wenn die Rastplatte außer Eingriff mit dem Stift kommt. Die Schwenkbarkeit des Pflegewerkzeuges ist notwendig, damit das Pflegewerkzeug nicht nur quer zur Längsachse des Landschaftspflegegerätes stehen kann, sondern auch schräg dazu, um das Gut nach links oder nach rechts abzuleiten.

Bei den bisher bekannten Landschaftspflegegeräten ist die Bedienerstange direkt an der Rastplatte befestigt. Die Rastausnehmungen der Rastplatte können durch Anheben außer Eingriff mit dem Stift gebracht werden, so dass dann das Pflegewerkzeug frei verschwenkt werden kann. Dieser Ausführung hat sich zwar in der Praxis bestens bewährt, da das Pflegewerkzeug rein mechanisch über einen einzigen Hebel bedient werden kann. Die Bedienung erfolgt intuitiv, weil der Bediener die mechanischen Vorgänge auf einfache Weise begreifen kann. Es wird jedoch in Rede stehenden Landschaftspflegegeräten gefordert, dass man wandschlüssig arbeiten kann, das heißt, eine seitliche Kante des Pflegewerkzeuges muss bis an eine Wand herangebracht werden können. Dabei ist zu berücksichtigen, dass die Bedienerstange nur so lang sein kann, dass das freie, der Rastplatte abgewandt liegende Ende nicht an die Wand stößt. Daraus ergibt sich, dass die Bedienung für die das Landschaftspflegegerät führende Person äußerst ungünstig ist, insbesondere dann, wenn die Antriebsmaschine eine relativ lange Motorhaube aufweist.

Der Erfindung liegt die Aufgabe zugrunde, dass insbesondere auch bei Landschaftspflegegeräten mit einem relativ großen Abstand zwischen dem Pflegewerkzeug und der das Landschaftspflegegerät führenden Person eine bequeme Bedienung möglich ist. Dabei soll jedoch das Pflegewerkzeug sicher in der jeweiligen Betriebsstellung gehalten werden. Bei Landschaftspflegegeräten mit einem Fahrersitz muss dieses Pflegewerkzeug auch von dort geschwenkt werden können. Au-Berdem muss sichergestellt sein, dass die das Landschaftspflegegerät führende Person die Arretierung erkennen kann. Ferner soll sichergestellt sein, dass bereits sich in Betrieb befindliche Landschaftspflegegeräte mit den Pflegewerkzeugen nachgerüstet werden können.

Die gestellte Aufgabe wird gelöst, indem die Bedienerstange mit einer drehbar auf einen ortsfesten Bolzen gelagerten Ausrückstange verbunden ist, deren Drehachse achsparallel zur Schwenkachse der Rastplatte verläuft und dass der Ausrückhebel mit der Rastplatte und mit dem Pflegewerkzeug funktionell derart in einer Wirkverbindung steht, dass bei einer linearen Bewegung der Bedienerstange zumindest die Rastplatte entriegelt und anschließend das Pflegewerkzeug schwenkbar ist.

Die Bedienerstange in Verbindung mit der Ausrückstange ist nunmehr so gestaltet, dass die Bedienerstange gegenüber der Mittellängsachse des Landschaftspflegegerätes unabhängig von der Schrägstellung des Pflegewerkzeuges in gleicher Position steht. Dadurch kann auch in den beiden äußersten Schrägstellungen des Pflegewerkzeuges das Pflegewerkzeug an eine Wand herangebracht werden, ohne dass die Bedienerstange stört. Außerdem kann die Länge so variiert werden, dass auch bei Pflegewerkzeugen, bei denen der Abstand zwischen der Person und dem Pflegewerkzeug sehr groß ist, daran angepasst werden kann, so dass eine komfortable Bedienung gegeben ist. Ferner ist besonders vorteilhaft, dass das System als Einhandbedienung angesehen werden kann, da das Entriegeln der Rastplatte und das Schwenken des Pflegewerkzeuges allein durch die Bedienerstange durchgeführt wird. Es sei noch erwähnt, dass nach dem Schwenken des Pflegewerkzeuges dieses selbstverständlich wieder verriegelt wird, indem der Stift in eine Rastausnehmung der Rastplatte eingreift.

Der Schwenkwinkel der Rastplatte ist zweckmäßigerweise in beiden Richtungen durch je einen ortsfesten Anschlag begrenzt. Die Ausrückeinrichtung ist jedoch so ausgelegt, dass zunächst immer die Rastausnehmungen der Rastplatte außer Eingriff mit dem Stift kommen, und zwar unabhängig davon, ob die Bedienerstange gezogen oder gedrückt wird. Das die Rastausnehmungen aufweisende Ende der Rastplatte wird immer nach oben geschwenkt und stößt an einen Anschlag, der gleichzeitig ein Versteifungsblech sein kann. Der untere Anschlag kann durch den Werkzeughalter gebildet sein.

Es ist ferner vorgesehen, dass die Drehachse des Ausrückhebels unterhalb der Schwenkachse der Rastplatte liegt. Dadurch wird ein Hebel zwischen der Drehachse des Ausrückhebels und der Schwenkachse der Rastplatte gebildet, wodurch die Rastplatte angehoben werden kann. Die Rastplatte ist in vorteilhafter Weise so gestaltet, dass auch der Ausrückhebel daran gelagert ist.

Ferner ist vorgesehen, dass fluchtend zur Schwenkachse der Rastplatte in dem Schwenkweg des Ausrückhebels ein ortsfester Anschlag angeordnet ist. Dadurch kann nach der Freigabe der Rastplatte durch die auf den Ausrückhebel wirkende Druckkraft das Verschwenken des Pflegewerkzeuges bewirkt werden. Eine konstruktiv einfache Lösung ergibt sich, wenn dieser Anschlag eine Rolle ist, die auf der verlängerten Drehachse der Rastplatte gelagert ist. Dadurch wird eine Gleitreibung während des Schwenkens der Rastplatte vermieden, da sich die Drehachse der Rastplatte gegenüber der Rolle verdrehen kann.

Zur Verschwenkung des Pflegewerkzeuges in die entgegengesetzte Richtung ist vorgesehen, dass an dem Ausrückhebel an der dem Verbindungsbereich mit der Bedienerstange abgewandten Ende eine Laufrolle drehbar gelagert oder ein Anschlag angesetzt ist, die bzw. der sich beim Ziehen der Bedienerstange an Bauteilen des Pflegewerkzeuges abstützt. Der Ausrückhebel ist ein zweiarmiger Hebel, wobei jeder Hebelarm die Verschenkung des Pflegewerkzeuges bewirkt. Um den Ausrückhebel bei verrastetem Pflegewerkzeug in eine Neutrallage zu fixieren, ist vorgesehen, dass daran eine Rückholfeder eingehängt ist, die mit dem anderen Ende an dem Pflegewerkzeug derart festgesetzt ist, dass der Ausrückhebel am zugehörigen Anschlag anliegt.

Es sei noch erwähnt, dass die Rollen entfallen können, wenn die Reibung zwischen den sich kontaktierenden Flächen relativ gering ist.

Anhand der beiliegenden Zeichnungen wird die Erfindung noch näher erläutert. Es zeigen:
- Figur 1: ein Pflegewerkzeug eines erfindungsgemäßen Landschaftspflegegerätes in Draufsicht, und
- Figur 2: das Pflegewerkzeug gemäß der Figur 1 mit Blick auf die Anbauseite.

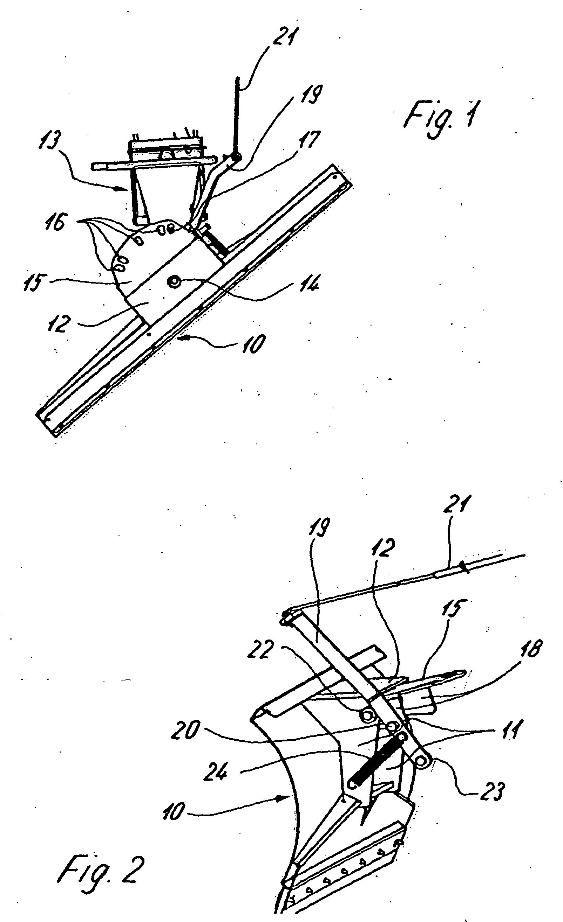

Aus Gründen der vereinfachten Darstellung ist in den Figuren 1 und 2 nur das Pflegewerkzeug in Form eines Räumschildes 10 dargestellt. Das Räumschild 10 ist an der Anbauseite mit senkrecht und parallel und im Abstand zueinander stehenden Versteifungsblechen 11 ausgestattet, deren obere Ränder durch ein Anschlagblech 12 ebenfalls verstärkend miteinander verbunden sind.

Wie die Figur 1 zeigt, ist das Räumschild 10 über einen nicht näher erläuterten Werkzeughalter 13 mit dem Landschaftspflegegerät verbunden. Der Werkzeughalter 13 ist fest an dem Pflegegerät angekoppelt. Dieser Werkzeughalter 13 ist aus Darstellungsgründen in der Figur 2 nicht dargestellt. Das Räumschild 10 ist um einen fest in den Werkzeughalter 13 eingesetzten Bolzen 14 schwenkbar, der die Schwenkachse bildet. Zwischen den beiden Versteifungsblechen 11 ist eine Rastplatte 15 auf einem die Drehachse bildenden Bolzen drehbar gelagert. Die Rastplatte 15 ist im dargestellten Ausführungsbeispiel mit fünf Rastausnehmungen 16 versehen, die auf einem zum Bolzen 14 konzentrischen Kreisbogen liegen. Der Werkzeughalter 13 ist mit einem Stift 17 ausgestattet, der je nach Stellung des Räumschildes 10 in eine der Rastausnehmungen 16 eingreift, so dass das Räumschild 10 fixiert ist.

Wie insbesondere die Figur 2 zeigt, sind an der Rastplatte 15 an der unteren Seite zwei Stege 18 angeordnet, die parallel und im Abstand zueinander verlaufen. An dem in der Darstellung gemäß der Figur 2 linken Steg 18 ist ein Ausrückhebel 19 drehbar gelagert. Der den Ausrückhebel 19 tragende Bolzen ist durch das Bezugszeichen 20 gekennzeichnet. Die Drehachse des Ausrückhebels 19 liegt parallel und im Abstand zur Schwenkachse der Rastplatte 15. Demzufolge wirkt der Ausrückhebel 19 als zweiarmiger Hebel. Wie die Figur 1 zeigt, ist der Ausrückhebel 19 mehrfach gekröpft, so dass sein freies Ende so zum Bedienungsort der das Landschaftspflegegerät führenden Person steht, dass daran eine Bedienerstange 21 angesetzt werden kann, die durch Ziehen oder Drücken zunächst eine Schwenkbewegung der Rastplatte 15 und anschließend eine Drehbewegung des Räumschildes 10 bewirkt.

Auf den seitlich gegenüber dem Versteifungsblech 11 vorstehenden Teil des die Rastplatte 15 tragenden Bolzens ist eine Rolle 22 aufgesetzt, die als Anschlag für den Ausrückhebel 19 gilt. Am freien Endbereich des Ausrückhebels 19 ist eine weitere Laufrolle 23 drehbar gelagert, die auch durch einen Anschlag ersetzt werden könnte. An dem Rückholhebel 19 ist zwischen dem Bolzen 20 und der Laufrolle 23 eine Rückholfeder 24 eingehängt, die mit ihrem anderen Ende am Räumschild 10 festgelegt ist.

In der Normalstellung wird durch die Rückholfeder 24 bewirkt, dass der Ausrückhebel 19 an der Rolle 22 anliegt, wobei die Laufrolle 23 an einem vertikalen Versteifungsblech 11 des Räumschildes 10 anliegt. Die Rastplatte 15 liegt dann auf dem Werkzeughalter 13 an, der in diesem Fall als Anschlag wirkt. Die Figur 2 zeigt den Fall, wenn auf die Bedienerstange 21 durch die das Landschaftspflegegerät führende Person eine Druckkraft aufgebracht wird. Dadurch bewegt sich die Bedienerstange 21 gemäß der Darstellung nach links. Durch den Hebel zwischen dem die Rastplatte 15 tragenden Bolzen und dem Bolzen 20 wird die Rastplatte 15 solange angehoben, bis sie gegen das Anschlagblech 12 schlägt. Dadurch kommt die jeweilige Rastausnehmung 16 außer Eingriff mit dem Stift 17, so dass durch eine weitere Bewegung der Bedienerstange 21 das Räumschild 10 geschwenkt wird.

Wird dagegen die Bedienerstange 21 in der Darstellung gemäß der Figur 2 durch Aufbringen einer Zugkraft nach rechts gezogen, löst sich der Ausrückhebel 19 von der Rolle 22. Die untere Laufrolle 23 gleitet dann an einem vertikalen Versteifungsblech 11 des Räumschildes 10 entlang nach oben. Dadurch wird zunächst die Rastplatte 15 angehoben, bis sie gegen das Anschlagblech 12 schlägt. Wird die Bedienerstange 21 weiterhin gezogen, schwenkt das Räumschild 10 in der anderen Richtung. Sinngemäß werden durch die lineare Bewegung der Bedienerstange 21 zwei Drehbewegungen erzeugt, wobei die Achsen quer zueinander stehen.

Die Erfindung ist nicht auf das dargestellte Ausführungsbeispiel beschränkt. Wesentlich ist, dass zunächst beim Ausüben einer Druck- oder einer Zugkraft auf die linear bewegliche Bedienerstange 21 zunächst eine Entriegelung der Rastplatte 15 durch eine Schwenkbewegung um eine Horizontalachse erfolgt, und dass nach der Freigabe durch weiteres Ziehen oder Drücken an der Bedienerstange 21 die Schwenkbewegung des Pflegewerkzeuges um eine quer zur Schwenkachse der Rastausnehmung 16 stehende Drehachse erfolgt.

### Bezugszeichen

- 10: Räumschild
- 11: Versteifungsbleche
- 12: Anschlagblech
- 13: Werkzeughalter
- 14: Bolzen
- 15: Rastplatte
- 16: Rastausnehmungen
- 17: Stift
- 18: Stege
- 19: Ausrückhebel
- 20: Bolzen
- 21: Bedienerstange
- 22: Rolle
- 23: Laufrolle
- 24: Rückholfeder

## Patentansprüche

1. Motorgetriebenes Landschaftspflegegerät, welches frontseitig mit einem um eine feste Achse (14) schwenkbaren Pflegewerkzeug (10), insbesondere einem Räumschild, ausgestattet ist, welches über einen Werkzeughalter (13) mit dem Pflegegerät auswechselbar gekoppelt ist, wobei an dem Pflegewerkzeug (10) eine um eine horizontale Achse schwenkbare, mit Rastausnehmungen (16) versehene Rastplatte (15) gelagert ist, deren Rastausnehmungen (16) mittels einer Bedienerstange (21) in und außer Eingriff mit einem in einem festen Bauteil, vorzugsweise im Werkzeughalter (13), eingesetzten Stift (17) bringbar sind, **dadurch gekennzeichnet, dass** die Bedienerstange (21) mit einem drehbar auf einem ortsfesten Bolzen gelagerten Ausrückhebel (19) verbunden ist, dessen Drehachse achsparallel zur Schwenkachse der Rastplatte (15) verläuft, und dass der Ausrückhebel (19) mit der Rastplatte (15) und mit dem Pflegewerkzeug (10) funktionell derart in einer Wirkverbindung steht, dass bei einer linearen Bewegung der Bedienerstange (21) zunächst die Rastplatte (15) entriegelt und anschließend das Pflegewerkzeug (10) schwenkbar ist.

2. Motorgetriebenes Landschaftspflegegerät nach Anspruch 1, **dadurch gekennzeichnet, dass** der Schwenkwinkel der Rastplatte (15) in beiden Richtungen durch je einen ortsfesten Anschlag begrenzt ist.

3. Motorgetriebenes Landschaftspflegegerät nach Anspruch 2, **dadurch gekennzeichnet, dass** der obere Anschlag für die Rastplatte (15) ein an das Pflegewerkzeug (10) angesetztes Anschlagblech (12) und der untere Anschlag durch den Werkzeughalter (13) gebildet ist.

4. Motorgetriebenes Landschaftspflegegerät nach Anspruch 1, **dadurch gekennzeichnet, dass** die Drehachse (20) des Ausrückhebels (19) unterhalb der Schwenkachse der Rastplatte (15) liegt.

5. Motorgetriebenes Landschaftspflegegerät nach Anspruch 1 oder 4, **dadurch gekennzeichnet, dass** die Rastplatte (15) derart ausgebildet ist, dass der Ausrückhebel (19) daran drehbar gelagert ist.

6. Motorgetriebenes Landschaftspflegegerät nach einem oder mehreren der vorhergehenden Ansprüche 1 bis 5, **dadurch gekennzeichnet, dass** fluchtend zur Schwenkachse der Rastplatte (15) in dem Schwenkweg des Ausrückhebels (19) ein ortsfester Anschlag (22) angeordnet ist.

7. Motorgetriebenes Landschaftspflegegerät nach Anspruch 6, **dadurch gekennzeichnet, dass** der Anschlag eine Rolle (22) ist, die auf einer verlängerten Drehachse der Rastplatte (15) gelagert ist.

8. Motorgetriebenes Landschaftspflegegerät nach einem oder mehreren der vorhergehenden Ansprüche 1 bis 7, **dadurch gekennzeichnet, dass** der Ausrückhebel (19) an der dem Verbindungsbereich mit der Bedienerstange (21) abgewandten Ende eine Laufrolle (23) drehbar gelagert oder ein Anschlag angesetzt ist, der sich beim Ziehen der Bedienerstange (21) an Bauteilen des Pflegewerkzeuges (10) abstützt.

9. Motorgetriebenes Landschaftspflegegerät nach einem oder mehreren der vorhergehenden Ansprüche 1 bis 8, **dadurch gekennzeichnet, dass** an dem Ausrückhebel (19) eine Rückholfeder (24) eingehängt ist, die mit dem anderen Ende an dem Pflegewerkzeug (10) derart festgesetzt ist, dass der Ausrückhebel (19) in einer Neutrallage am zugehörigen Anschlag (22) anliegt.

## Claims

1. Engine-driven landscape maintenance device, which is equipped at the front with a maintenance implement (10), in particular a rake blade capable of pivoting about a fixed axis (14), which is interchangeably connected to the maintenance device via an implement holder (13), in conjunction with which a locking plate (15) capable of pivoting about a horizontal axis and provided with locking recesses (16) is mounted on the maintenance implement (10), of which the locking recesses (16) are capable of being brought into and out of engagement by means of an operator's control rod (21) with a spigot (17) inserted in a fixed component, preferably in the implement holder (13), **characterized in that** the operator's control rod (21) is connected to a release lever (19) rotatably mounted on a fixed bolt, of which the axis of rotation is oriented axially parallel to the pivot axis of the locking plate (15), and **in that** the release lever (19) is functionally in an operating relationship with the locking plate (15) and with the maintenance implement (10) such that, in the event of a linear movement of the operator's control rod (21), the locking plate (15) is unlocked initially and the maintenance implement (10) is then free to pivot.

2. Engine-driven landscape maintenance device according to Claim 1, **characterized in that** the pivot angle of the locking plate (15) is restricted in both directions in each case by a fixed abutment.

3. Engine-driven landscape maintenance device according to Claim 2, **characterized in that** the upper abutment for the locking plate (15) is an abutment plate (12) fitted to the maintenance implement (10) and the lower abutment is formed by the implement holder (13).

4. Engine-driven landscape maintenance device according to Claim 1, **characterized in that** the axis of rotation (20) of the release lever (19) lies beneath the pivot axis of the locking plate (15).

5. Engine-driven landscape maintenance device according to Claim 1 or 4, **characterized in that** the locking plate (15) is executed in such a way that the release lever (19) is rotatably mounted thereon.

6. Engine-driven landscape maintenance device according to one or more of the foregoing Claims 1 to 5, **characterized in that** a fixed abutment (22) is arranged in alignment with the pivot axis of the locking plate (15) in the pivot path of the release lever (19).

7. Engine-driven landscape maintenance device according to Claim 6, **characterized in that** the abutment is a roller (22), which is mounted on a prolongation of the axis of rotation of the locking plate (15).

8. Engine-driven landscape maintenance device according to one or more of the foregoing Claims 1 to 7, **characterized in that** a roller (23) is pivotally mounted on, or an abutment is fitted to the end of the release lever (19) facing away from the area of connection to the operator's control rod (21), which is supported on component parts of the maintenance implement (10) in conjunction with pulling the operator's control rod (21).

9. Engine-driven landscape maintenance device according to one or more of the foregoing Claims 1 to 8, **characterized in that** a return spring (24) is suspended from the release lever (19), which spring is attached by its other end to the maintenance implement (10) in such a way that the release lever (19) bears against the associated abutment (22) in a neutral position.

## Revendications

1. Appareil d'entretien de paysage entraîné par un moteur, qui est muni, côté frontal, d'un outil d'entretien (10), en particulier une lame de niveleuse, pouvant pivoter autour d'un axe fixe (14), qui est couplé de manière interchangeable à l'appareil d'entretien par l'intermédiaire d'un support d'outil (13), dans lequel sur l'outil d'entretien (10) est montée une plaque de crantage (15) munie d'évidements de crantage (16) et pouvant pivoter autour d'un axe horizontal, dont les évidements de crantage (16) peuvent être mis en prise et hors de prise, au moyen d'une tige de commande (21), avec un ergot (17) inséré dans une pièce fixe, de préférence dans le support d'outil (13), **caractérisé en ce que** la tige de commande (21) est reliée à un levier de dégagement (19) mobile, monté sur un goujon stationnaire, dont l'axe de rotation s'étend parallèlement à l'axe de pivotement de la plaque de crantage (15), et **en ce que** le levier de dégagement (19) est en liaison fonctionnelle active avec la plaque de crantage (15) et avec l'outil d'entretien (10) de telle manière que, par un mouvement linéaire de la tige de commande (21), la plaque de crantage (15) est d'abord déverrouillée, puis l'outil d'entretien (10) peut être pivoté.

2. Appareil d'entretien de paysage entraîné par un moteur selon la revendication 1, **caractérisé en ce que** l'angle de pivotement de la plaque de crantage (15) est limité dans les deux directions par une butée stationnaire à chaque fois.

3. Appareil d'entretien de paysage entraîné par un moteur selon la revendication 2, **caractérisé en ce que** la butée supérieure pour la plaque de crantage (15) est formée par une tôle de butée (12) rapportée sur l'outil d'entretien (10) et la butée inférieure par le support d'outil (13).

4. Appareil d'entretien de paysage entraîné par un moteur selon la revendication 1, **caractérisé en ce que** l'axe de rotation (30) du levier de dégagement (19) se trouve au-dessous de l'axe de pivotement de la plaque de crantage (15).

5. Appareil d'entretien de paysage entraîné par un moteur selon la revendication 1 ou 4, **caractérisé en ce que** la plaque de crantage (14) est conformée de telle manière que le levier de dégagement (19) est monté sur elle de manière rotative.

6. Appareil d'entretien de paysage entraîné par un moteur selon une ou plusieurs des revendications précédentes 1 à 5, **caractérisé en ce qu'**en alignement avec l'axe de pivotement de la plaque de crantage (15), une butée stationnaire (22) est placée dans la course de pivotement du levier de dégagement (19).

7. Appareil d'entretien de paysage entraîné par un moteur selon la revendication 6, **caractérisé en ce que** la butée est un rouleau (22) qui est monté sur un axe de rotation prolongé de la plaque de crantage (15).

8. Appareil d'entretien de paysage entraîné par un moteur selon une ou plusieurs des revendications précédentes 1 à 7, **caractérisé en ce qu'**à l'extrémité du levier de dégagement (19) opposée à la zone de jonction avec la tige de commande (21) est monté rotatif un rouleau (23) ou une butée, qui s'appuie sur des parties de l'outil d'entretien (10) lorsqu'on tire la tige de commande (21).

9. Appareil d'entretien de paysage entraîné par un moteur selon une ou plusieurs des revendications précédentes 1 à 8, **caractérisé en ce que** sur le levier de dégagement (19) est accroché un ressort de rappel (24) qui, à son autre extrémité, est fixé à l'outil d'entretien (10) de telle manière que le levier de dégagement (19) s'appuie dans une position neutre contre la butée (22) associée.
